# EUROPÄISCHE PATENTSCHRIFT

(11) **EP 1 226 357 B1**
(45) Veröffentlichungstag und Bekanntmachung des Hinweises auf die Patenterteilung: **16.03.2005**
(21) Anmeldenummer: 00949294.3
(22) Anmeldetag: 08.07.2000
(51) Int. Cl.: F03D 1/06, F04D 29/38, B64C 11/16

(54) **ROTORBLATT**
ROTOR BLADE
PALE DE ROTOR

(30) Priorität: 20.10.1999 DE 19950620
(43) Veröffentlichungstag der Anmeldung: 31.07.2002
(73) Patentinhaber: Wobben, Aloys, 26607 Aurich (DE)
(72) Erfinder: Wobben, Aloys, 26607 Aurich (DE)
(74) Vertreter: Göken, Klaus G.
(86) Internationale Anmeldenummer: PCT/EP2000/006494
(87) Internationale Veröffentlichungsnummer: WO 2001/029414

(56) Entgegenhaltungen:
- DE-A- 2 717 379
- DE-A- 2 721 450
- DE-A- 3 018 678
- DE-A- 4 442 628
- FR-A- 2 745 040
- GB-A- 2 308 867
- US-A- 5 784 978
- PATENT ABSTRACTS OF JAPAN vol. 017, no. 641 (M-1516), 29. November 1993 (1993-11-29) -& JP 05 202890 A (MITSUBISHI ELECTRIC CORP), 10. August 1993 (1993-08-10)

## Beschreibung

Die Erfindung betrifft ein Rotorblatt einer Windenergieanlage sowie eine Windenergieanlage mit einem solchen Rotorblatt. Rotorblätter verschiedenster Ausführungen sind bereits seit langem bekannt. Bekannte Rotorblätter können aus verschiedenen Materialien hergestellt werden, wie beispielsweise Aluminium, Titan, Stahl, Faserverbundmaterial (Glas-, Kohle- oder Aramidfaser), Holz usw. Unabhängig von der geometrischen Gestaltung des Rotorblattmaterials sind jedoch alle Rotorblätter in der Regel unifarben gestaltet. Hierbei wird ein weißer Farbanstrich bevorzugt.

Aus Patent Abstracts of Japan, vol. 017, Nr. 641 (M-1516), 29. November 1993 und JP 05 202890 A (Mitsubishi Electric Corporation), 10. August 1993 ist ein Rotorblatt mit einem Rotorblattanschluss und einer Rotorblattspitze und einer dazwischen angeordneten Fläche bekannt, die in wenigstens zwei bezüglich der Helligkeit unterschiedliche Bereiche aufgeteilt ist.

Bekannt ist es auch, ein Rotorblatt im Rotorblattspitzenbereich mit einem signalroten Farbanstrich zu versehen, was insbesondere dann erforderlich ist, wenn sich eine Windenergieanlage im Bereich eines Flughafens oder einer Flugzone befindet, so dass die Windenergieanlage bzw. die Rotorblätter für den Flugverkehr besser erkennbar sind.

Windenergieanlagen stellen wie alle Bauwerke im gewissen Maße Fremdkörper in der natürlichen Landschaft dar. Zwar wird von der Gesellschaft akzeptiert und begrüßt, dass Windenergieanlagen betrieben werden, weil mit ihnen sehr effektiv auf regenerative Weise Energie gewonnen werden kann, allerdings fühlen sich durch Windkraftanlagen auch immer wieder die Bewohner, die in der Nähe einer Windkraftanlage wohnen, gestört.

Es ist Aufgabe der Erfindung, eine Windenergieanlage besser in das Landschaftsbild einzubinden die Umweltverträglichkeit zu verbessern und den Eindruck des Fremdkörpers zu verringern. Dies soll vor allem für Anlagen mit großem Rotordurchmesser (mehr als 40 m) erreicht werden.

Die Aufgabe wird durch ein Rotorblatt mit dem Merkmal nach Anspruch 1 bzw. durch eine Windenergieanlage nach Anspruch 8 gelöst. Vorteilhafte Weiterbildungen sind in den Unteransprüchen beschrieben.

Die Erfindung beruht auf der Erkenntnis, dass dann, wenn der Bereich des Rotorblattes, welcher der Rotorblattspitze zugeordnet ist und der über eine relativ geringe Breite verfügt, (verglichen mit den nabennähen Bereichen) und welcher beim Drehen des Rotors die größte Umfangsgeschwindigkeit annimmt mit, einem taghimmelfarbenen Ton versehen wird, der Rotor kleiner als in Wirklichkeit erscheint. Ein solcher taghimmelfarbener oder naturfarbener Ton kann beispielsweise ein bläulicher Farbton, ein grauer Farbton, ein blau/grauer Farbton, ein grünlicher Farbton, ein graufgrünlicher Farbton, ein blau/grünlicher Farbton und/oder ein grünlich, bläulicher, grauer Farbton sein.

Ein Rotor mit einem oder mehreren Rotorblättern der vorbeschriebenen Art erweckt optisch für den Betrachter den Eindruck, dass der gesamte Rotor deutlich kleiner wirkt als er in Wirklichkeit ist. Diese "optische Verkleinerung" stellt sich insbesondere bei bewölktem Himmel (oder diffusen Licht) ein. Mit der Erfindung lässt sich eine "optische Verkleinerung" des gesamten Rotorblattdurchmessers von mehr als 10-20% erreichen. Statt der vorgenannten Farbtöne kann der Farbton im dunkleren Bereich auch so gewählt werden, dass er stets dem Hintergrund, vor dem die Windenergieanlage steht, angepasst ist.

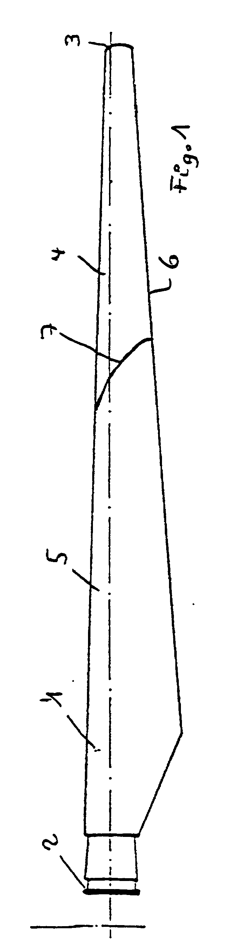

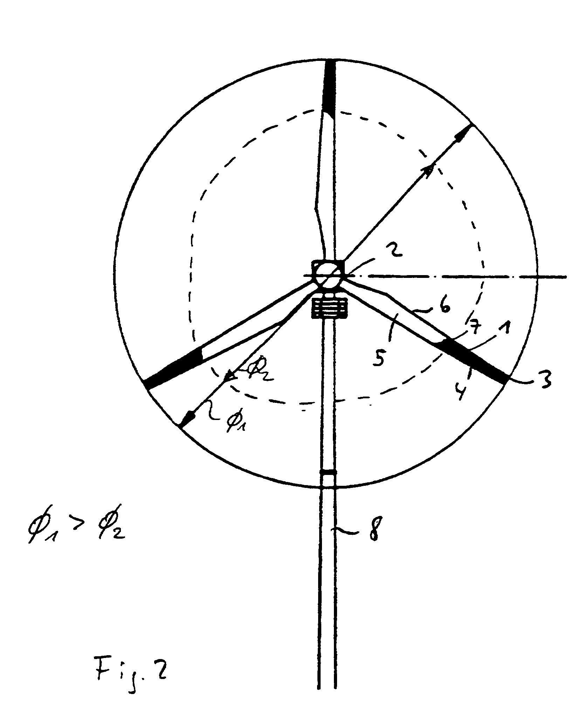

Die Erfindung ist nachfolgend anhand eines konkreten Ausführungsbeispiels näher erläutert. Figur 1 zeigt die Ansicht eines Rotorblattes. Figur 2 zeigt die Ansicht einer Windenergieanlage mit einem Rotor, welcher drei Rotorblätter aufweist.

Figur 1 zeigt in der Ansicht ein Rotorblatt (1) mit einem Rotorblattanschluss (2) an der einen Seite und einer Rotorblattspitze (3) an der anderen Seite. Die Fläche des Rotorblattes, auf die der Wind trifft (Staufläche) ist in zwei farblich unterschiedliche Bereiche (4, 5) aufgeteilt, von denen der Bereich (5), der dem Rotorblattanschluss (2) zugeordnet ist, deutlich heller ist als der Bereich (4), der der Rotorblattspitze (3) zugeordnet ist. Der dunklere der beiden Bereiche ist insbesondere in einem grauen, blauen oder grau/blauen oder in einem anderen taghimmelfarbenen oder naturfarbenen oder hintergrundfarbenen Farbton enthalten. Im Gegensatz zu einem bekannten signalroten Farbanstrich des Rotorblattspitzenbereichs ist bei dem erfindungsgemäßen Rotorblatt dieser Bereich gerade nicht optisch gut erkennbar, sondern im Gegenteil, mit einer "quasi" Tarnfarbe versehen, so dass ein einzelnes Rotorblatt, welches sich bei einer Windenergieanlage mit dessen Rotor dreht, zumindestens im äußeren Rotorblattspitzenbereich (4), welcher blau, grau oder blau/grau gestaltet ist, optisch kaum mehr wahrnehmbar ist, vor allem wenn der Himmel bewölkt ist, was gerade in küstennahen Bereichen, in denen die meisten Windenergieanlagen aufgestellt werden, sehr häufig der Fall ist. Der helle Bereich des Rotorblattes nimmt hierbei etwa 50-70% der Gesamtfläche ein, während der dunklere Bereich etwa 10-30% der Gesamtfläche des Rotorblattes einnimmt.

Selbstverständlich ist es auch möglich, nur die vordere Seite des Rotorblattes mit der entsprechenden Einfärbung zu versehen. Allerdings kann auch die hintere Seite des Rotorblattes mit der erfindungsgemäßen Farbgestaltung versehen sein.

Der Übergang zwischen dem hellen und dunkleren Bereich kann hierbei schlagartig oder auch fließend erfolgen und die Grenzlinie zwischen dem dunklen und hellen Bereich muss hierbei nicht den gleichbleibenden Abstand zum Rotorblattanschluss aufweisen, sondern kann auch durch einen Bogen (7) gebildet werden (wie dargestellt), so dass zur Rotorblatthinterkante (6) der helle Bereich (5) in den dunklen Bereich (4) hineinragt.

Selbstverständlich ist es auch möglich, die Rotorblattspitze (Tip) in der Farbgestaltung zu halten wie den dunkleren Bereich der Rotorblattfläche selbst, so dass bei einer Windenergieanlage, deren Rotor sich dreht, der Betrachter nun kaum mehr die wahre Länge der Rotorblätter bzw. den wahren Durchmessers des Rotors erkennen kann, weil aufgrund der dunkleren Gestaltung des Rotorblattspitzenbereichs eine "optische Verkleinerung" des Rotors einstellt und der Betrachter glaubt, dass der gesamte Rotor deutlich kleiner ist, als es der Wirklichkeit entspricht. Somit wird eine solche Windenergieanlage als weniger störend empfunden.

Damit ist es auch möglich, den Rotorblattdurchmesser insgesamt noch zu erhöhen, was die Leistungsfähigkeit der Windenergieanlage ansteigen lässt, ohne dass eine solche Vergrößerung des Rotorblattdurchmessers mit einer Erhöhung des "Fremdkörpersempfindens" der gesamten Windenergieanlage einhergeht.

Figur 2 zeigt die Ansicht einer Windenergieanlage mit drei vorbeschriebenen Rotorblättern. Die Windenergieanlage besteht aus einem Turm (8) und einem darauf gelagerten Maschinenhorst, welcher einen Rotor (7) aufnimmt, an dem die drei Rotorblätter (1) befestigt sind.

Da der dem Rotorblattnabenanschluss abgewandte Teil der Rotorblätter naturfarben bzw. taghimmelfarben oder in entsprechende Hintergrundfarben eingefärbt ist, ist dieser Bereich für den Betrachter, wenn sich die Windenergieanlage in Betrieb befindet, kaum erkennbar, weil jedes einzelne Rotorblatt im Rotorblattspitzenbereich relativ schmal ist, verglichen zu den rotorblattnabenseitigen Bereichen des Rotorblattes und gleichzeitig im Rotorblattspitzenbereich die Umfangsgeschwindigkeit (nicht Winkelgeschwindigkeit) deutlich höher ist als in den nabenzugeordneten Bereichen des Rotorblattes.

Durch die "Naturfarbgebung" der Fläche des Rotorblattes im Rotorblattspitzenbereich ist es für den Betrachter nicht möglich, die genaue Kontur des Rotorblattspitzenbereichs noch zu erkennen und insgesamt erscheint dem Betrachter der Rotor der Windenergieanlage deutlich kleiner.

Statt der beschriebenen zwei verschiedenen Farbtonbereiche können auch mehrere Farbtonbereiche vorgesehen werden, wobei sich der dunkelste dieser Farbtonbereiche stets am Rotorblattspitzenbereich angeordnet sein sollte.

## Patentansprüche

1. Rotorblatt (1) mit einem Rotorblattanschluss (2) und einer Rotorblattspitze (3) und einer dazwischen angeordneten Fläche,
**dadurch gekennzeichnet, dass** die Fläche in wenigstens zwei bezüglich der Helligkeit unterschiedliche Bereiche (4, 5) aufgeteilt ist, von denen der hellere Bereich (5) näher am Rotorblattanschluss (2) angeordnet ist als der dunklere Bereich (4), der in einem Naturfarbton und/oder Taghimmelfarbton und/oder Hintergrundfarbton gestaltet ist.

2. Rotorblatt nach Anspruch 1,
**dadurch gekennzeichnet, dass** der dunklere Bereich mehr blaue, graue, grüne und/oder blau/graue, grüne Töne aufweist als der hellere Bereich, der bevorzugt weiß ist.

3. Rotorblatt nach Anspruch 1 oder 2,
**dadurch gekennzeichnet, dass** der hellere Bereich etwa 40-90% der Rotorblattfläche einnimmt.

4. Rotorblatt nach einem der vorhergehenden Ansprüche,
**dadurch gekennzeichnet, dass** der dunklere Bereich etwa 10-50% der Rotorblattfläche einnimmt.

5. Rotorblatt nach einem der vorhergehenden Ansprüche,
**dadurch gekennzeichnet, dass** mehrere dunkle Bereiche ausgebildet sind, von denen der dunkelste im Bereich der Rotorblattspitze ausgebildet ist.

6. Rotorblatt nach einem der vorhergehenden Ansprüche,
**dadurch gekennzeichnet, dass** der Übergang zwischen den hellen und dunklen Bereichen fließend verläuft.

7. Windenergieanlage mit wenigstens einem Rotorblatt nach einem der vorhergehenden Ansprüche.

## Claims

1. Rotor blade (1) having a rotor blade connection (2) and a rotor blade tip (3), and having a surface arranged in between them,
**characterized in that** the surface is split into at least two areas (4, 5) whose brightness is different, the brighter area (5) of which is arranged closer to the rotor blade connection (2) than the darker area (4), which has a natural hue and/or a daylight sky hue, and/or a background hue.

2. Rotor blade according to Claim 1,
**characterized in that** the darker area has more blue, grey, green and/or blue/grey green tones than the brighter area, which is preferably white.

3. Rotor blade according to Claim 1 or 2,
**characterized in that** the brighter area covers approximately 40-90% of the rotor blade area.

4. Rotor blade according to one of the preceding claims,
**characterized in that** the darker area covers approximately 10-50% of the rotor blade area.

5. Rotor blade according to one of the preceding claims,
**characterized in that** there are a number of dark areas, the darkest of which is formed in the area of the rotor blade tip.

6. Rotor blade according to one of the preceding claims,
**characterized in that** the transition between the bright and dark areas is smooth.

7. Wind energy installation having at least one rotor blade according to one of the preceding claims.

## Revendications

1. Pale de rotor (1) avec un raccord de pale de rotor (2) et un bout de pale de rotor (3) et une surface disposée entre ceux-ci, **caractérisée en ce que** la surface est divisée en au moins deux zones (4, 5) différentes en terme de luminosité, la zone plus claire (5) étant disposée plus près du raccord de pale de rotor (2) que la zone plus foncée qui est réalisée dans une couleur naturelle et/ou une couleur de ciel de jour et/ou une couleur d'arrière-plan.

2. Pale de rotor selon la revendication 1, **caractérisée en ce que** la zone plus foncée comporte plus de tons bleus, gris, verts et/ou bleu/vert, verts que la zone plus claire qui est, de préférence, blanche.

3. Pale de rotor selon la revendication 1 ou 2, **caractérisée en ce que** la zone plus claire occupe environ 40-90 % de la surface de l'aube de rotor.

4. Pale de rotor selon l'une quelconque des revendications précédentes, **caractérisée en ce que** la zone plus foncée occupe environ 10-50 % de la surface de l'aube de rotor.

5. Pale de rotor selon l'une quelconque des revendications précédentes, **caractérisée en ce que** plusieurs zones foncées sont formées dont la plus foncée est formée dans la zone du bout de pale de rotor.

6. Pale de rotor selon l'une quelconque des revendications précédentes, **caractérisée en ce que** la transition entre les zones claires et les zones foncées se fait progressivement.

7. Eolienne avec au moins une pale de rotor selon l'une quelconque des revendications précédentes.
